# EUROPEAN PATENT SPECIFICATION

(11) **EP 1 980 740 B1**
(45) Date of publication and mention of the grant of the patent: **30.11.2016**
(21) Application number: 07707504.2
(22) Date of filing: 26.01.2007
(51) Int. Cl.: F02M 21/02, F02M 51/06, F02M 53/04

(54) **ENGINE GAS FUEL SUPPLY APPARATUS**
GASBRENNSTOFFZUFUHRVORRICHTUNG FÜR MOTOR
APPAREIL D'ALIMENTATION EN COMBUSTIBLE GAZEUX POUR MOTEUR

(30) Priority: 02.02.2006 JP 2006025914
(43) Date of publication of application: 15.10.2008
(73) Proprietor: Keihin Corporation, Tokyo 163-0539 (JP)
(72) Inventor: NAKAJIMA, Yoji, Kakuda-shi, Miyagi 981-1505 (JP)
(74) Representative: Weickmann & Weickmann PartmbB
(86) International application number: PCT/JP2007/051272
(87) International publication number: WO 2007/088790

(56) References cited:
- JP-A- 2000 345 916
- JP-A- 2000 345 916
- JP-A- 2002 089 373
- JP-U- 05 078 956
- US-A- 5 483 943
- US-A- 5 752 689

## Description

### TECHNICAL FIELD

The present invention relates to an engine gas and gasoline fuel supply apparatus for supplying a gas such as LPG or CNG to an engine as a fuel, and particularly to an improvement of an engine gas and gasoline fuel supply apparatus that includes a gas fuel injection valve formed from a valve housing having at one end a fuel inlet hole communicating with a gas fuel tank, a nozzle member provided at the other end of the valve housing and having a valve seat and a nozzle hole running through a central part of this valve seat, a valve body slidably fitted into a guide hole of the valve housing and via one end face opening and closing the nozzle hole in cooperation with the valve seat, a coil supported on the valve housing, a fixed core coupled to the valve housing and disposed inside the coil so as to face the other end face of the valve body, and a return spring provided in a compressed state between the fixed core and the valve body and urging the valve body toward the valve seat side, so that when the coil is energized, the fixed core attracts the valve body thereby separating it from the valve seat and gas fuel is supplied to the engine from the nozzle hole.

### BACKGROUND ART

An engine gas fuel supply apparatus is already known, as disclosed in Patent Publication 1 below. Another example is also shown in JP-2000 345916.
Patent Publication 1: Japanese Utility Model Registration Application Laid-open No. 5-78956

### DISCLOSURE OF INVENTION

### PROBLEMS TO BE SOLVED BY THE INVENTION

Conventionally, gas fuel with which a gas fuel tank of such an engine gas fuel supply apparatus is charged is contaminated to some degree with lubricating oil within a compressor used for the charging. Because of this, fuel supplied from the gas fuel tank to a gas fuel injection valve is slightly contaminated with the oil, and the oil might become attached to a valve seat of the gas fuel injection valve, a sliding face of a valve body, etc. The attached oil slows down movement of the valve body, particularly when the engine is cold, and the oil viscosity increases, thus impeding operation of the engine.

In a general fuel supply apparatus, when the engine is cold the engine is started using gasoline fuel, gas fuel is heated utilizing engine cooling water by means of a vaporizer, and the engine is run by switching over to the gas fuel after the temperature of the cooling water reaches a temperature that enables the gas fuel to be vaporized. However, unless the gas fuel injection valve reaches a high temperature, operation of the valve body is impaired due to the high viscosity of the attached oil.

Operating the engine with gasoline fuel until it attains a hot state in which the viscosity of the attached oil decreases and the operation of the valve body is not impeded could be considered, but since it takes a considerable time to attain such a hot state, the consumption of gasoline fuel increases.

The engine gas fuel supply apparatus disclosed in Patent Publication 1 is provided with an evaporator for heating and vaporizing fuel from the gas fuel tank utilizing engine cooling water, but even if fuel is heated by this evaporator, unless the gas fuel injection valve reaches a high temperature, since the temperature of the oil attached to the interior of the gas fuel injection valve remains low and the viscosity thereof is high, the operation of the valve body is impeded.

The present invention has been accomplished in the light of such circumstances, and it is an object thereof to provide an engine gas and gasoline fuel supply apparatus of the above type that enables a valve seat and a sliding part of a valve body of a gas fuel injection valve to be heated at an early stage after starting the engine, the viscosity of oil attached thereto to be decreased, and the gas fuel injection valve to be operated properly at an early stage.

### MEANS FOR SOLVING THE PROBLEMS

In order to attain the above object, according to a first aspect of the present invention, there is provided an engine gas and gasoline fuel supply apparatus comprising a gas fuel injection valve formed from a valve housing having at one end a fuel inlet hole communicating with a gas fuel tank, a nozzle member provided at the other end of the valve housing and having a valve seat and a nozzle hole running through a central part of this valve seat, a valve body slidably fitted into a guide hole of the valve housing and via one end face opening and closing the nozzle hole in cooperation with the valve seat, a coil supported on the valve housing, a fixed core coupled to the valve housing and disposed inside the coil so as to face the other end face of the valve body, and a return spring provided in a compressed state between the fixed core and the valve body and urging the valve body toward the valve seat side, so that when the coil is energized, the fixed core attracts the valve body thereby separating the valve body from the valve seat and gas fuel is supplied to an engine from the nozzle hole, characterized in that it comprises separately from the gas fuel injection valve a gasoline fuel injection valve capable of injecting gasoline fuel, a heating chamber for heating the valve seat and the periphery of the guide hole is disposed in the area around the valve housing, and cooling water for the engine is made to pass through the heating chamber as a heat source therefor, when the engine is cold, fuel being injected from the gasoline fuel injection valve into the engine, thus starting the engine and making it run on gasoline fuel, and when the temperature of engine cooling water becomes high and the valve seat and the periphery of the guide hole thereby reach a predetermined temperature, the engine being switched to gas fuel running in which fuel is injected from the gas fuel injection valve into the engine.

According to a second aspect of the present invention, in addition to the first aspect, in order to hold the gas fuel injection valve, an injection valve holder is provided, the injection valve holder fitting onto the outer periphery of the valve housing in the area around the valve seat and the guide hole, and the heating chamber is formed in the valve holder.

According to a third aspect of the present invention, in addition to the second aspect, the injection valve holder is formed so as to hold a plurality of the gas fuel injection valves, and the heating chamber, which is continuous and used in common for the plurality of gas fuel injection valves, is formed in the valve holder.

### EFFECTS OF THE INVENTION

In accordance with the first aspect of the present invention, the inner peripheral face of the guide hole, the outer peripheral face of the valve body, and the area around the valve seat of the gas fuel injection valve can be heated effectively by the heating chamber through which cooling water of the engine passes, the oil attached thereto is therefore also heated, the viscosity thereof is decreased, and it is thereby possible to prevent malfunctioning of the gas fuel injection valve caused by the attached oil.

In accordance with the second aspect of the present invention, since the heating chamber is formed in the valve holder, which supports the gas fuel injection valve, not only is it unnecessary to provide a heating member used exclusively therefor and specially having a heating chamber, but it is also possible to heat effectively the valve seat of the gas fuel injection valve and the periphery of the guide hole, thereby reliably preventing malfunctioning of the gas fuel injection valve caused by attached oil.

In accordance with the third aspect of the present invention, it is possible, with the continuous heating chamber provided in the common valve holder supporting the plurality of gas fuel injection valves, to heat the valve seats and the periphery of the guide holes of the plurality of gas fuel injection valves at a stroke, thus simplifying the heating structure therefor and thereby contributing to a reduction in cost.

### BRIEF DESCRIPTION OF THE DRAWINGS

[FIG. 1] FIG. 1 is a schematic diagram of an engine fuel supply system related to an embodiment of the present invention (first embodiment).
[FIG. 2] FIG. 2 is a perspective view of an area around a gas fuel injection valve in the same system (first embodiment).
[FIG. 3] FIG. 3 is a view from arrow 3 in FIG. 2 (first embodiment).
[FIG. 4] FIG. 4 is a sectional view along line 4-4 in FIG. 3 (first embodiment).
[FIG. 5] FIG. 5 is an enlarged sectional view along line 5-5 in FIG. 4 (first embodiment).

### EXPLANATION OF REFERENCE NUMERALS AND SYMBOLS

- E: Engine
- 4: Gas fuel supply apparatus
- 9: Gas fuel tank
- 10: Gas fuel injection valve
- 14: Valve holder
- 13: Water jacket
- 15: Heating chamber (second heating chamber)
- 42: Valve housing
- 49: Guide hole
- 51: Nozzle member
- 53: Valve seat
- 54: Nozzle hole
- 55: Valve body
- 65: Coil
- 69: Fixed core
- 73: Return spring

### BEST MODE FOR CARRYING OUT THE INVENTION

A mode for carrying out the present invention is explained below by reference to a preferred embodiment of the present invention shown in the attached drawings.

### Embodiment 1

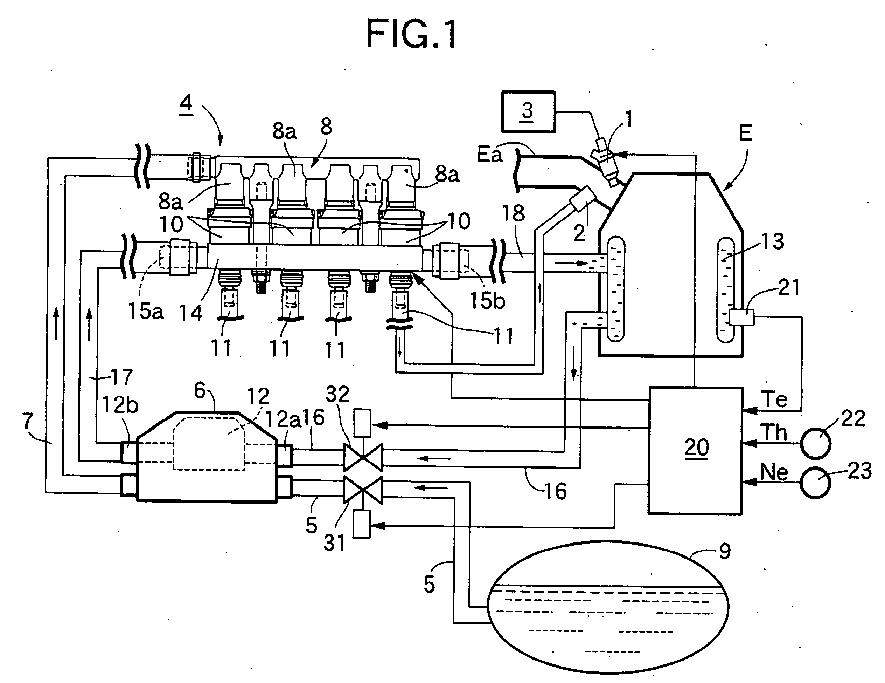

Firstly, in FIG. 1, a multicylinder engine E has a plurality, corresponding to the number of cylinders, of intake pipes Ea (only one thereof is shown in FIG. 1) connected to a side face of a cylinder head thereof, and these intake pipes Ea are equipped with gasoline fuel injection valves 1 capable of injecting gasoline fuel toward corresponding cylinders and with gas fuel injection tubes 2 similarly injecting gas as a fuel toward the corresponding cylinders. Connected to the gasoline fuel injection valves 1 is a known gasoline fuel supply apparatus 3, and connected to the gas fuel injection tube 2 is a gas fuel supply apparatus 4 of the present invention for supplying a gas such as LPG or CNG as a fuel.

This gas fuel supply apparatus 4 includes a gas fuel tank 9 (charged with LPG liquefied gas in the illustrated example), a vaporizer 6 connected to a fuel outlet of the gas fuel tank 9 via a first fuel passage 5, a fuel distribution pipe 8 connected to a fuel outlet of the vaporizer 6 via a second fuel passage 7 and, connected to a plurality of distribution opening tubes 8a of the fuel distribution pipe 8, the same number of gas fuel injection valves 10 as there are fuel injection tubes 2, fuel outlets of these gas fuel injection valves 10 being connected to the fuel injection tubes 2 via a plurality of pipes 11. The vaporizer 6 reduces the pressure of high pressure liquefied fuel fed out from the gas fuel tank 9 and heats and vaporizes it, and includes a first heating chamber 12 for carrying out the heating.

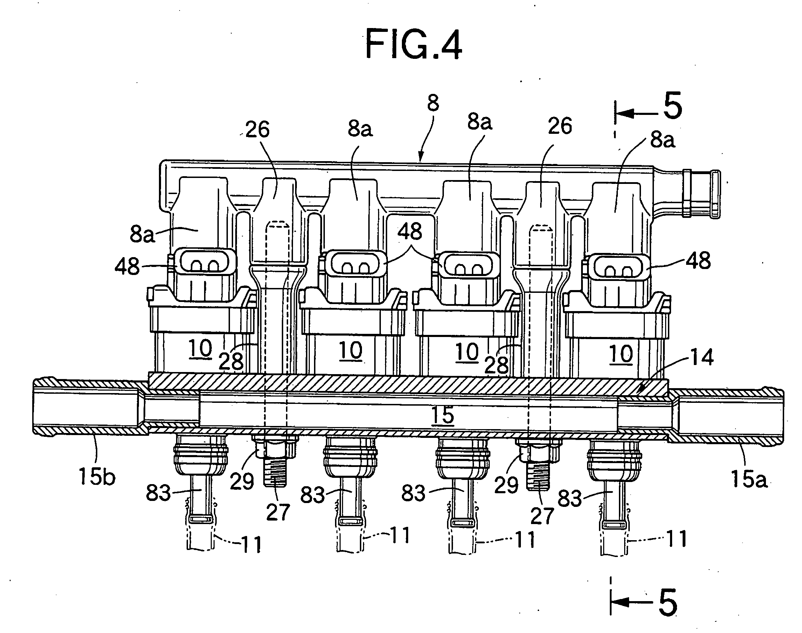

Furthermore, the plurality of gas fuel injection valves 10 are supported in a row on a common valve holder 14 having a bracket 14a supported at an appropriate position on the engine E; this valve holder 14 includes a common second heating chamber 15 (see FIG. 4) for heating a predetermined section, which is described later, of all of the gas fuel injection valves 10, and a hot water passage is formed between the first and second heating chambers 12 and 15 and a water jacket 13 for cooling the engine E, hot water that has absorbed heat in the water jacket 13 being circulated through the hot water passage. This hot water passage is formed from a first hot water passage 16 extending from the water jacket 13 and connected to a hot water inlet tube 12a of the vaporizer 6, a second hot water passage 17 extending from a hot water outlet tube 12b of the vaporizer 6 and connected to a hot water inlet tube 15a of the valve holder 14, and a third hot water passage 18 extending from a hot water outlet tube 15b of the valve holder 14 and reaching the water jacket 13.

The first fuel passage 5 is provided with a fuel cutoff valve 31, and the first hot water passage 16 is provided with a hot water cutoff valve 32. Inputted into an electronic control unit 20 for controlling operation of the gasoline fuel injection valves 1, the gas fuel injection valves 10, the fuel cutoff valve 31, the hot water cutoff valve 32, etc. are output signals from an engine temperature sensor 21 for detecting an engine temperature, that is, a water temperature Te within the water jacket 13 of the engine E, a throttle sensor 22 for detecting a degree of opening Th of a throttle valve of the engine E, an engine rotational speed sensor 23 for detecting an engine rotational speed Ne, etc.

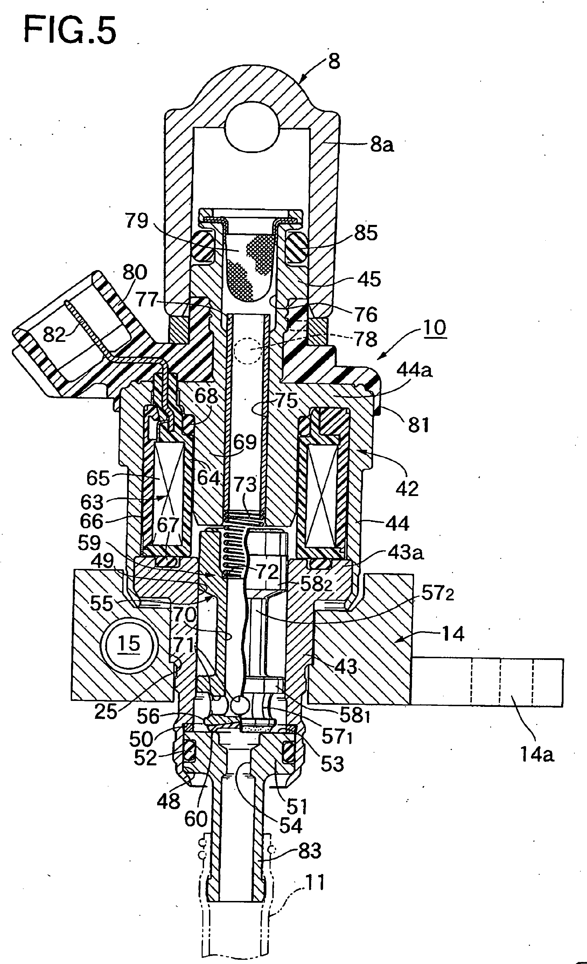

The gas fuel injection valve 10 is now explained in detail by reference to FIG. 5. This gas fuel injection valve 10 includes a valve housing 42 formed from a cylindrical first housing part 43, a cylindrical second housing part 44, with a larger diameter than that of the first housing part 43, having a front end part joined by swaging to a flange 43a at the rear end of the first housing part 43, and a cylindrical third housing part 45, with a smaller diameter than that of the second housing part 44, provided so as to be connected integrally to a rear end wall 44a of the second housing part 44, and the first to third housing parts 43 to 45 are all formed from a magnetic material.

. The first housing part 43 has formed coaxially therein a mounting hole 48 opening at the front end and a guide hole 49 opening at the rear end and having a smaller diameter and a longer length than the mounting hole 48, and an annular shim 50 and a disc-shaped nozzle member 51 are fitted into the mounting hole 48 in sequence and secured by swaging the front edge of the first housing part 43 inward. In this arrangement, an annular sealing member 52 is fitted around the outer periphery of the nozzle member 51, the annular sealing member 52 being in intimate contact with an inner peripheral face of the mounting hole 48. The annular shim 50 is for adjusting the position at which the nozzle member 51 is fitted by selection of its thickness.

The guide hole 49 slidably houses and retains a valve body 55. This valve body 55 is formed from a plunger 59 formed by coaxially and integrally connecting, from the front end side, a flange portion 56, a short axial portion 57₁, a first journal portion 58₁, a long axial portion 57₂, and a second journal portion 58₂, and a rubber seating member 60 joined by baking to a front end face of the flange portion 56; seating the seating member 60 on the valve seat 53 and separating it therefrom enables the nozzle hole 54 to be opened and closed. The plunger 59 is made of a magnetic material so that it also serves as a movable core.

In the plunger 59, the short axial portion 57₁ and the long axial portion 57₂ are formed so as to have a smaller diameter than that of the first and second journal portions 58₁ and 58₂, and the first and second journal portions 58₁ and 58₂ are both slidably supported in the guide hole 49.

The second housing part 44 houses a coil assembly 63. This coil assembly 63 is formed from a bobbin 64, a coil 65 wound around the outer periphery of the bobbin 64, and a resin molded part 66 for sealing the coil 65 in the bobbin 64, and an annular sealing member 67 is disposed between the bobbin 64 and the flange 43a of the first housing part 43.

A cylindrical fixed core 69 fitted into an inner peripheral face of the bobbin 64 is formed integrally with a rear end wall 44a of the second housing part 44, and a sealing member 68 for sealing mating parts thereof is disposed between the bobbin 64 and the fixed core 69. The plunger 59 has its rear end part projecting into the bobbin 64 so as to face a front end face of the fixed core 69.

The plunger 59 is provided with a lengthwise hole 70 extending from its rear end face and finishing before the flange portion 56, and a plurality of transverse holes 71 providing communication between the lengthwise hole 70 and an outer peripheral face of the short axial portion 57₁. In this arrangement, an annular spring seat 72 facing the fixed core 69 side is formed partway along the lengthwise hole 70.

A support hole 75 communicating with the lengthwise hole 70 and extending from the fixed core 69 to the front half of the third housing part 45 is formed in central parts thereof, and an inlet hole 76 communicating with the support hole 75 and having a larger diameter than that thereof is provided in the rear half of the third housing part 45. A pipe-shaped retainer 77 is inserted into the support hole 75, the retainer 77 supporting between itself and the spring seat 72 a return spring 73 that urges the valve body 55 toward the valve seat 53 side, and the retainer 77 is secured to the third housing part 45 by swaging the outer periphery of the third housing part 45 after a set load of the return spring 73. has been adjusted by changing the insertion depth of the retainer 77. Reference numeral 78 denotes a swaged portion. A fuel filter 79 is fitted into the inlet hole 76.

A resin molded part 81 is formed so as to extend from a rear end part of the second housing part 44 to the front half of the third housing part 45 and cover the outer peripheral faces thereof, the resin molded part 81 integrally having a coupler 80 on one side, and the coupler 80 retains a current-carrying terminal 82 connected to the coil 65.

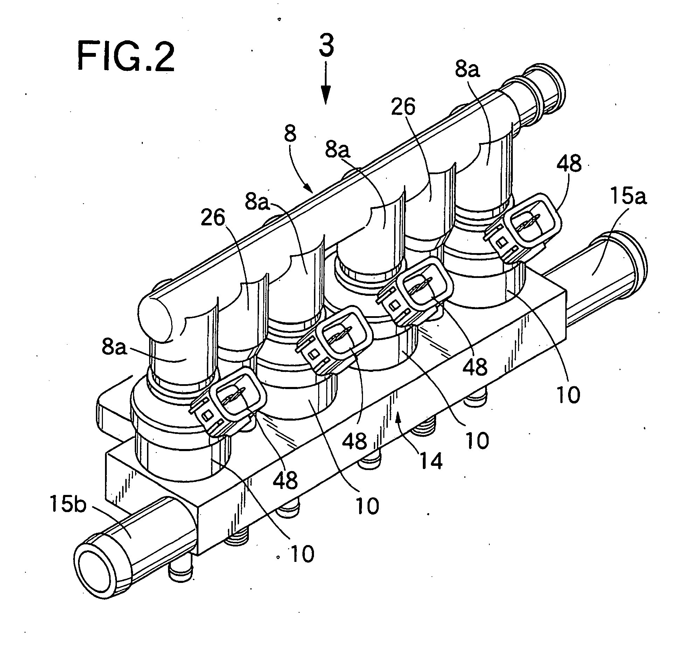

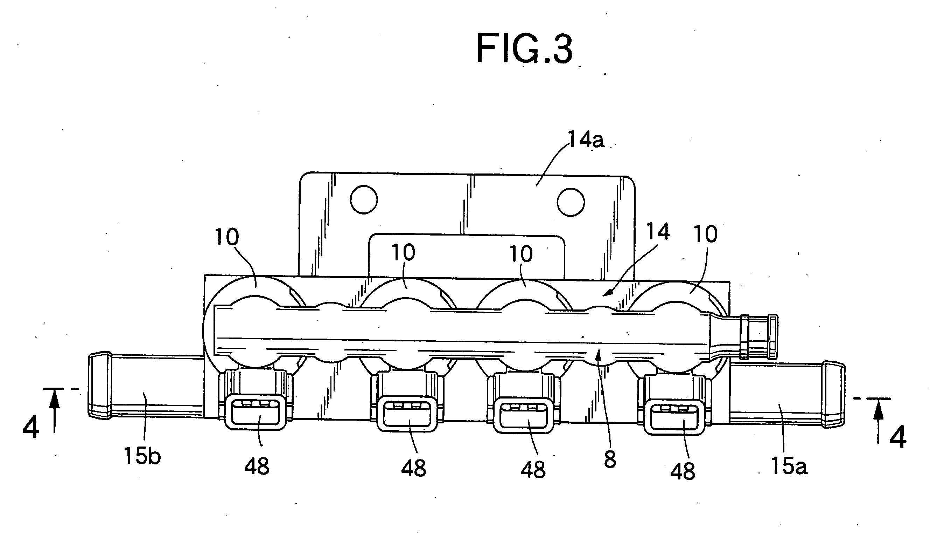

A structure for mounting each gas fuel injection valve 10 and the fuel distribution pipe 8 on the valve holder 14 is now explained by reference to FIG. 2 to FIG. 5.

A plurality of mounting holes 25 are formed in the valve holder 14 so as to correspond to the plurality of gas fuel injection valves 10, and the first housing 43 of the gas fuel injection valve 10 corresponding to each mounting hole 25 is fitted thereinto, the depth to which it is fitted being restricted by the front end of the second housing 44 abutting against the valve holder 14. An inner peripheral face of the mounting hole 25 is fitted around an outer peripheral face of the first housing 43 in the proximity of the guide hole 49 and the valve seat 53, and the second heating chamber 15 is formed in the valve holder 14 so as to be as close to the inner peripheral face of the mounting hole 25 as possible. Therefore, when the valve holder 14 is heated by hot water introduced into the second heating chamber 15, the inner peripheral face of the guide hole 49 and the area around the valve seat 53 are heated particularly effectively.

Furthermore, a rear end part of the third housing part 45 is fitted into the corresponding distribution opening tube 8a of the fuel distribution pipe 8 via a sealing member 85. A pair of support bosses 26 are formed on the fuel distribution pipe 8 so as to project between adjacent distribution opening tubes 8a, stud bolts 27 and 27 are implanted in end faces of these support bosses 26 and 26, these stud bolts 27 and 27 are disposed so as to run through the valve holder 14, distance collars 28 and 28 are disposed between the support bosses 26 and 26 and the valve holder 14, and the fuel distribution pipe 8 is secured to the valve holder 14 by screwing and tightening nuts 29 and 29 onto the lower ends of the stud bolts 27 and 27.

Moreover, a joint pipe 83 is formed integrally with a front end face of the nozzle member 51, the interior of the joint pipe 83 communicating with the nozzle hole 54, and this joint pipe 83 is connected to the fuel injection tube 2 via a pipe 11.

The operation of this embodiment is now explained.

When the engine E is cold, the electronic control unit 20 operates the gasoline fuel supply apparatus 3 so that fuel is injected from the gasoline fuel injection valves 1 into the intake pipes Ea, thus starting and warming up the engine E.

During warming up of the engine E, the electronic control unit 20 controls the fuel cutoff valve 31 so that it is in a valve closed state and the hot water cutoff valve 32 so that it is in a valve open state. Therefore, since cooling water for the engine E circulates from the water jacket 13 through the first heating chamber 12 of the vaporizer 6 and the second heating chamber 15 of the valve holder 14 to the water jacket 13, when warming up of the engine E is nearly completed, cooling water that has absorbed heat in the water jacket 13 attains a high temperature, and the valve holder 14 and the vaporizer 6 thereby attain a predetermined temperature.

The electronic control unit 20 accordingly stops operation of the gasoline fuel supply apparatus 3, switches to operation of the gas fuel supply apparatus 4, opens the fuel cutoff valve 31, and controls the passage of current through the coils 65 of the gas fuel injection valves 10.

Liquefied gas fuel fed out from the gas fuel tank 9 due to opening of the fuel cutoff valve 31 is heated and vaporized in the vaporizer 6, then supplied to the fuel distribution pipe 8, and distributed from the plurality of distribution opening tubes 8a to the plurality of gas fuel injection valves 10.

In each gas fuel injection valve 10, when the coil 65 is in a de-energized state, the valve body 55 is pressed forward by the urging force of the return spring 73, thus seating the seating member 60 on the valve seat 53. In this state, gas fuel fed to the distribution opening tube 8a flows into the inlet hole 76 of the valve housing 42 and is filtered by the fuel filter 79, passes through the interior of the pipe-shaped retainer 77 and the lengthwise hole 70 and transverse holes 71 of the valve body 55, and is held in readiness within the guide hole 49.

When the coil 65 is energized by the passage of current, a magnetic flux thus generated runs in sequence through the fixed core 69, the second housing part 44, the flange 43a, and the valve body 55, and the valve body 55 is attracted toward the fixed core 69 against the set load of the return spring 73 and separated from the valve seat 53 by the magnetic force. Consequently, the gas fuel held in readiness in the guide hole 49 passes through the valve seat 53, the nozzle hole 54 and the pipes 11, and is injected into the intake pipe Ea of the engine E from the gas fuel injection tube 2, and the amount of fuel injected is controlled by the valve opening time of the valve body 55.

As described above, since fuel supplied from the gas fuel tank 9 to the gas fuel injection valve 10 is contaminated to some degree with oil, the oil contained in the gas fuel becomes attached to the inner peripheral face of the guide hole 49, the outer peripheral face of the valve body 55, the valve seat 53, etc. when the gas fuel passes through the guide hole 49 and the valve seat 53, but since as described above the valve holder 14 supporting the gas fuel injection valves 10 is heated by cooling water for the engine E, the valve holder 14 heats effectively the inner peripheral face of the guide hole 49, the outer peripheral face of the valve body 55, and the area around the valve seat 53 in proximity to the second heating chamber 15, and the oil attached thereto is also heated. As a result, since the viscosity of the attached oil decreases, it is possible to prevent malfunction of the gas fuel injection valve 10 due to the attached oil.

As described above, forming the second heating chamber 15 for heating the gas fuel injection valve 10 in the valve holder 14, which supports the gas fuel injection valve 10, means that it is unnecessary to provide a heating member used exclusively therefor and specially having a heating chamber.

Moreover, since the second heating chamber 15 is formed in the valve holder 14 along the direction in which the plurality of gas fuel injection valves 10 are arranged in order to heat the valve seat 53 and the periphery of the guide hole 49 of the plurality of gas fuel injection valves 10 at a stroke, the heating structure therefor can be simplified, and consequently the cost thereof can be reduced.

When the electronic control unit 20 determines due to an output signal from the engine temperature sensor 21 that the water temperature of the water jacket 13 has attained a predetermined value or greater, the electronic control unit 20 puts the hot water cutoff valve 32 in a valve closed state, thus suppressing excessive increase in the temperature of the second heating chamber 15 and thereby preventing the gas fuel injection valve 10 from being overheated.

## Claims

1. An engine gas and gasoline fuel supply apparatus comprising a gas fuel injection valve (10) formed from a valve housing (42) having at one end a fuel inlet hole (76) communicating with a gas fuel tank (9), a nozzle member (51) provided at the other end of the valve housing (42) and having a valve seat (53) and a nozzle hole (54) running through a central part of this valve seat (53), a valve body (55) slidably fitted into a guide hole (49) of the valve housing (42) and via one end face opening and closing the nozzle hole (54) in cooperation with the valve seat (53), a coil (65) supported on the valve housing (42), a fixed core (69) coupled to the valve housing (42) and disposed inside the coil (65) so as to face the other end face of the valve body (55), and a return spring (73) provided in a compressed state between the fixed core (69) and the valve body (55) and urging the valve body (55) toward the valve seat (53) side, so that when the coil (65) is energized, the fixed core (69) attracts the valve body (55) thereby separating the valve body (55) from the valve seat (53) and gas fuel is supplied to an engine (E) from the nozzle hole (54),
**characterized in that** it comprises separately from the gas fuel injection valve (10) a gasoline fuel injection valve (1) capable of injecting gasoline fuel, a heating chamber (15) for heating the valve seat (53) and the periphery of the guide hole (49) is disposed in the area around the valve housing (42), and cooling water for the engine (E) is made to pass through the heating chamber (15) as a heat source therefor, when the engine (E) is cold, fuel being injected from the gasoline fuel injection valve (1) into the engine (E), thus starting the engine (E) and making it run on gasoline fuel, and when the temperature of engine (E) cooling water becomes high and the valve seat (53) and the periphery of the guide hole (49) thereby reach a predetermined temperature, the engine (E) being switched to gas fuel running in which fuel is injected from the gas fuel injection valve (10) into the engine (E).

2. The engine gas and gasoline fuel supply apparatus according to Claim 1,
wherein in order to hold the gas fuel injection valve (10), an injection valve holder (14) is provided, the injection valve holder (14) fitting onto the outer periphery of the valve housing (42) in the area around the valve seat (53) and the guide hole (49), and the heating chamber (15) is formed in the valve holder (14).

3. The engine gas and gasoline fuel supply apparatus according to Claim 2,
wherein the injection valve holder (14) is formed so as to hold a plurality of the gas fuel injection valves (10), and the heating chamber (15), which is continuous and used in common for the plurality of gas fuel injection valves (10), is formed in the valve holder (14).

## Patentansprüche

1. Gas- und Benzinbrennstoffzufuhrvorrichtung für einen Motor, umfassend ein Gasbrennstoffeinspritzventil (10), welches aus einem Ventilgehäuse (42) gebildet ist, welches an einem Ende ein Brennstoffeinlassloch (76) aufweist, welches mit einem Gasbrennstoffbehälter (9) in Verbindung steht, ein Düsenelement (51), welches an dem anderen Ende des Ventilgehäuses (42) bereitgestellt ist und einen Ventilsitz (53) sowie ein Düsenloch (54), welches einen zentralen Teil dieses Ventilsitzes (53) durchläuft, aufweist, einen Ventilkörper (55), welcher verschiebbar in ein Führungsloch (49) des Ventilgehäuses (42) eingesetzt ist und mittels einer Stirnfläche das Düsenloch (54) zusammen mit dem Ventilsitz (53) öffnet und schließt, eine an dem Ventilgehäuse (42) gehalterte Spule (65), einen feststehenden Kern (69), welcher mit dem Ventilgehäuse (42) verbunden und derart in der Spule (65) angeordnet ist, dass er der anderen Stirnfläche des Ventilkörpers (55) zugewandt ist, und eine Rückstellfeder (73), welche in einem komprimierten Zustand zwischen dem feststehenden Kern (69) sowie dem Ventilkörper (55) bereitgestellt ist und den Ventilkörper (55) zu der Seite des Ventilsitzes (53) drängt, so dass, wenn die Spule (65) erregt wird, der feststehende Kern (69) den Ventilkörper (55) anzieht und somit den Ventilkörper (55) von dem Ventilsitz (53) trennt und einem Motor (E) Gasbrennstoff von dem Düsenloch (54) zugeführt wird,
**dadurch gekennzeichnet, dass** sie gesondert von dem Gasbrennstoffeinspritzventil (10) ein Benzinbrennstoffeinspritzventil (1) umfasst, welches dazu in der Lage ist, Benzinbrennstoff einzuspritzen, wobei eine Erwärmungskammer (15) zum Erwärmen des Ventilsitzes (53) und der Umgebung des Führungslochs (49) in dem Bereich um das Ventilgehäuse (42) angeordnet ist und Kühlwasser für den Motor (E) erzeugt wird, um die Erwärmungskammer (15) als eine Wärmequelle dafür zu durchlaufen, wenn der Motor (E) kalt ist, wobei Brennstoff von dem Benzinbrennstoffeinspritzventil (1) in den Motor (E) eingespritzt wird und somit der Motor (E) gestartet und mit Benzinbrennstoff betrieben wird, und wenn die Temparatur des Kühlwassers des Motors (E) hoch wird und der Ventilsitz (53) sowie die Umgebung des Führungslochs (49) dadurch eine vorbestimmte Temparatur erreichen, der Motor (E) auf Gasbrennstoffbetrieb geschaltet wird, in welchem Brennstoff von dem Gasbrennstoffeinspritzventil (10) in den Motor (E) eingespritzt wird.

2. Gas- und Benzinbrennstoffzufuhrvorrichtung für einen Motor nach Anspruch 1,
wobei eine Einspritzventilhalterung (14) bereitgestellt ist, um das Gasbrennstoffeinspritzventil (10) zu halten, wobei die Einspritzventilhalterung (14) an der äußeren Umgebung des Ventilgehäuses (42) in dem Bereich um den Ventilsitz (53) und das Führungsloch (49) angebracht ist, und wobei die Erwärmungskammer (15) in der Ventilhalterung (14) gebildet ist.

3. Gas- und Benzinbrennstoffzufuhrvorrichtung für einen Motor nach Anspruch 2,
wobei die Einspritzventilhalterung (14) derart gebildet ist, dass sie eine Mehrzahl der Gasbrennstoffeinspritzventile (10) hält, und wobei die Erwärmungskammer (15), welche stufenlos ist und gemeinsam mit der Mehrzahl von Gasbrennstoffeinspritzventilen (10) verwendet wird, in der Ventilhalterung (14) gebildet ist.

## Revendications

1. Appareil d'alimentation en essence et en combustible gazeux pour moteur comprenant une soupape d'injection de combustible gazeux (10) formée à partir d'un boîtier de soupape (42) ayant, au niveau d'une extrémité, un trou d'entrée de combustible (76) communiquant avec un réservoir de combustible gazeux (9), un élément de buse (51) prévu, au niveau de l'autre extrémité du boîtier de soupape (42) et ayant un siège de soupape (53) et un trou de buse (54) s'étendant à travers une partie centrale de ce siège de soupape (53), un corps de soupape (55) monté de manière coulissante dans un trou de guidage (49) du boîtier de soupape (42) et via une face d'extrémité, ouvrant et fermant le trou de buse (54) en coopération avec le siège de soupape (53), une bobine (65) supportée sur le boîtier de soupape (42), un noyau fixe (69) couplé au boîtier de soupape (42) et disposé à l'intérieur de la bobine (65) afin de faire face à l'autre face d'extrémité du corps de soupape (55), et un ressort de rappel (73) prévu dans un état comprimé entre le noyau fixe (69) et le corps de soupape (55) et poussant le corps de soupape (55) du côté du siège de soupape (53), de sorte que lorsque la bobine (65) est excitée, le noyau fixe (69) attire le corps de soupape (55), séparant ainsi le corps de soupape (55) du siège de soupape (53) et le combustible gazeux est amené à un moteur (E) à partir du trou de buse (54),
**caractérisé en ce qu'**il comprend, séparément de la soupape d'injection de combustible gazeux (10), une soupape d'injection d'essence (1) pouvant injecter de l'essence, une chambre de chauffage (15) pour chauffer le siège de soupape (53) et la périphérie du trou de guidage (49) est disposée dans la zone située autour du boîtier de soupape (42), et on fait passer de l'eau de refroidissement pour le moteur (E) par la chambre de chauffage (15) en tant que source de chaleur pour ce dernier, lorsque le moteur (E) est froid, le combustible étant injecté par la soupape d'injection d'essence (1) dans le moteur (E), démarrant ainsi le moteur (E) et le faisant fonctionner avec l'essence, et lorsque la température de l'eau de refroidissement du moteur (E) monte, et que le siège de soupape (53) et la périphérie du trou de guidage (49) atteignent ainsi une température prédéterminée, le moteur (E) est commuté sur le fonctionnement en combustible gazeux dans lequel le combustible est injecté à partir de la soupape d'injection de combustible gazeux (10) dans le moteur (E).

2. Appareil d'alimentation en essence et en combustible gazeux pour moteur selon la revendication 1,
dans lequel, afin de maintenir la soupape d'injection de combustible gazeux (10), on prévoit un support de soupape d'injection (14), le support de soupape d'injection (14) étant monté sur la périphérie externe du boîtier de soupape (42) dans la zone située autour du siège de soupape (53) et du trou de guidage (49), et la chambre de chauffage (15) est formée dans le support de soupape (14).

3. Appareil d'alimentation en essence et en combustible gazeux pour moteur selon la revendication 2,
dans lequel le support de soupape d'injection (14) est formé afin de maintenir une pluralité de soupapes d'injection de combustible gazeux (10) et la chambre de chauffage (15), qui est continue et utilisée en commun pour la pluralité de soupapes d'injection de combustible gazeux (10), est formée dans le support de soupape (14).
